# FASCICULE DE BREVET EUROPEEN

(11) **EP 0 364 323 B1**
(45) Date de publication et mention de la délivrance du brevet: **08.12.1993**
(21) Numéro de dépôt: 89402665.7
(22) Date de dépôt: 28.09.1989
(51) Int. Cl.: C08G 79/08

(54) **Procédé de synthèse de polymères à base de bore et d'azote précurseurs de nitrure de bore et produits susceptibles d'être ainsi obtenus**
Verfahren zur Herstellung von Bor und Stickstoff enthaltenden Polymeren, die Bornitridvorläufer sind und die erhaltenen Produkte
Process for the preparation of polymers containing boron and nitrogen as precursors of boron nitride, and products obtained

(30) Priorité: 06.10.1988 FR 8813111
(43) Date de publication de la demande: 18.04.1990
(73) Titulaire: RHONE-POULENC CHIMIE, 92408 Courbevoie Cédex (FR)
(72) Inventeur: Ardaud, Pierre, F-69110 Sainte-Foy-Les-Lyon (FR); Mignani, Gérard, F-69008 Lyon (FR); Charpenel, Maurice, F-69004 Lyon (FR)
(74) Mandataire: Dubruc, Philippe

(56) Documents cités:
- EP-A- 0 278 734
- GB-A- 2 163 761
- US-A- 4 581 468

## Description

L'invention a trait à un nouveau procédé de synthèse de polymères organométalliques à base de bore et d'azote, et aux produits nouveaux susceptibles d'être ainsi obtenus.

Elle concerne également, à titre d'application, l'utilisation de ces polymères pour la fabrication de produits et articles céramiques à base de nitrure de bore, notamment sous forme de fibres.

On sait que le nitrure de bore est un matériau de plus en plus recherché, en raison notamment de sa stabilité aux hautes températures, de sa résistance aux chocs thermiques, de sa grande inertie chimique et de sa très bonne conductivité thermique. D'autre part, sa faible conductivité électrique en fait un isolant de choix.

On connait à l'heure actuelle divers procédés pour préparer du nitrure de bore.

L'un d'entre eux consiste à faire réagir en phase gazeuse du trichlorure de bore avec de l'ammoniac. On obtient ainsi une poudre fine de nitrure de bore, qu'il est possible de fritter pour obtenir des pièces massives. Toutefois, les pièces obtenues présentent une microporosité qui peut être très génante pour certaines applications.

Plus récemment, on a découvert qu'il était possible de préparer du nitrure de bore par pyrolyse de polymères précurseurs.

L'intérêt de la voie polymère réside surtout dans les possibilités de mise en forme de ce type de produit, et plus particulièrement pour l'obtention, après pyrolyse, de fibres en nitrure de bore.

On a ainsi décrit dans le brevet US 4.581.468 un polymère organoborique qui est obtenu par action de l'ammoniac (ammonolyse) sur un trichloro-trialkylsilyl-borazole (composé cyclique), et qui, indique-t-on, permet d'aboutir, après filage puis pyrolyse à 970°C, à des fibres de nitrure de bore.

Toutefois, le composé cyclique de départ décrit dans ce document est très difficile à préparer, donc coûteux, et, de ce fait, ne peut guère laisser espérer d'application à l'échelle d'une production industrielle.

La présente invention a pour but je proposer des moyens simples, efficaces, économiques et de mise en oeuvre aisée, permettant d'aboutir sous des formes les plus diverses (fils, fibres, articles moulés, revêtements, pellicules, films, etc...) à de nouveaux polymères organométalliques à base de bore et d'azote qui, lors de leur pyrolyse, donnent des produits céramiques à base de nitrure de bore avec de bons rendements pondéraux.

On a maintenant trouvé, et il s'agit là d'un des premiers objets de la présente invention, que ce but, et d'autres, peuvent être atteints au moyen de la présente invention qui concerne en effet notamment un procédé de synthèse de polymères à base de bore et d'azote par réaction entre au moins un trihalogénoborane et au moins un composé silazane présentant au moins un groupement ≡ Si-NH-Si ≡, et qui est caractérisé par le fait qu'il consiste à introduire progressivement, en maintenant le milieu réactionnel à une température comprise entre - 100°C et 0°C, le rapport du nombre d'équivalent-gramme de groupement ≡ Si - NH - Si ≡ de silazane sur le nombre de mole de trihalogénoborane étant supérieur à 1, ledit composé silazane dans ledit trihalogénoborane, puis à récupérer le produit de réaction ainsi obtenu.

Les polymères à base de bore et d'azote susceptibles d'être obtenus notamment par ledit procédé constituent un second objet de la présente invention développé plus en détails ci-après.

La Demanderesse admet que la réaction entre un trihalogénoborane et un disilazane a déjà été étudiée dans la littérature. Il est ainsi connu (cf. par exemple K.A. ANDRIANOV, Bulletin of the Academy of Science, USSR, 1962, 3, p. 1757-1758) qu'un procédé consistant à introduire un trihalogénoborane de formule BX₃ dans un hexaalkyldisilazane de formule (R₃Si)₂NH conduit à un trialkylsilylaminodihalogénoborane de formule R₃SiNHBX₂ ; mais le problème est que ce dernier produit n'est qu'un simple monomère organoboré, et qu'il peut en aucun cas constituer en tant que tel un précurseur de nitrure de bore convenable.

Or, les travaux de la Demanderesse ont permis de mettre en évidence que, de façon totalement inattendue et surprenante, lorsque l'on procède à une introduction inverse des réactifs de départ, c'est-à-dire lorsque l'on introduit le composé silazane (notamment un disilazane) dans le trihalogénoborane, que l'on maintient le milieu réactionnel à une température relativement basse et que le rapport du nombre d'équivalent-gramme de groupement ≡ Si - NH - Si ≡ de silazane sur le nombre de mole de trihalogénoborane est supérieur à 1, il est alors possible d'aboutir à des produits polymériques nouveaux constituant de bons précurseurs de nitrure de bore.

Mais d'autres caractéristiques, aspects et avantages de l'invention apparaitront encore plus complètement à la lecture de la description qui va suivre, et des exemples concrets, mais non limitatifs, relatifs à sa mise en oeuvre.

Le trihalogénoborane de départ généralement utilisé dans le présent procédé est le trichloroborane, bien que tout autre halogénoborane puisse convenir, comme par exemple un trifluoro-, un tribromo- ou un triiodoborane.

Les composés silazanes présentant au moins un groupment ≡ Si - NH - Si ≡ utilisés dans le présent procédé sont des produits bien connus se présentant sous forme de monomères, d'oligomères et de polymères cycliques ou linéaires, et qui peuvent être préparés suivant une large variété de procédés à partir d'une gamme étendue de produits de départ, notamment par ammonolyse ou aminolyse d'un ou plusieurs organochlorosilanes, c'est à dire par réaction entre (a) au moins un organohalogénosilane de formule :

Rₐ X₄₋ₐSi

dans laquelle les radicaux R, identiques ou différents, sont choisis parmi l'hydrogène et les radicaux hydrocarbonés, éventuellement substitués, a représente 0,1, 2 ou 3, et (b) au moins un composé comportant au moins un groupement NH₂ ou NH comme par exemple l'ammoniac et les amines primaires ou secondaires.

Sont ainsi plus particulièrement utilisables dans le présent procédé les composés silazanes du type :

### 1 - polymères linéaires de formules (I) ou (II) :

H₂N(R₂ SiNH)ₚ SiR₂NH₂ (I)

R₃SiNH(R₂ SiNH)_{p′} SiR₃ (II)

dans lesquelles les radicaux R, identiques ou différents, sont choisis de préférence parmi l'hydrogène et les radicaux alkyles, cycloalkyles, aryles, alkylaryles et arylalkyles ; p et p′ sont des nombres entiers pouvant être compris entre 1 et 1000, de préférence entre 3 et 300. (voir par exemple les brevets FR-A-1086932 et US-A-2564674).

### 2 - les polymères cycliques de formule (III)

(R₂SiNH)ₙ (III)

dans laquelle les radicaux R, identiques ou différents, sont choisis de préférence parmi l'hydrogène et les radicaux alkyles, cycloalkyles, aryles, alkylaryles et arylalkyles ; n est un nombre entier compris entre 3 et 10, de préférence égal à 3 ou 4 (voir par exemple le brevet GB-A-881178).

Selon un mode préférentiel de réalisation de la présente invention, le composé silazane utilisé est un disilazane.

Les disilazanes utilisés dans le présent procédé sont des produits bien connus de l'état de la technique, et qui peuvent être préparés selon tout moyen connu en soi ou bien encore trouvés dans le commerce.

Ces produits répondent à la formule générale (IV) :

(R₃Si)₂NH (IV)

dans laquelle les radicaux R, identiques ou différents, sont choisis parmi l'hydrogène et les radicaux hydrocarbonés, éventuellement substitués.

Les radicaux hydrocarbonés préférés sont les radicaux alkyles, cycloalkyles, aryles, alkylaryles et arylalkyles.

Parmi les radicaux alkyles convenant pour la présente invention, on peut citer à titre d'exemples les radicaux méthyle, éthyle, propyle, butyle, pentyle, hexyle, heptyle et octyle. Parmi les radicaux cycloalkyles, on peut citer les radicaux cyclopentyle, cyclohexyle et cycloheptyle. A titre de radicaux aryles : les radicaux phényle et naphtyle ; de radicaux alkylaryles : les radicaux tolyle et xylyle ; et enfin de radicaux arylalkyles : les radicaux benzyle et phényléthyle. Les radicaux R préférés sont l'hydrogène ou un radical alkyle.

Des exemples de composés disilazanes, pris seuls ou en mélange, envisagés par l'invention sont :

[(CH₃)₃Si]₂NH, [C₆H₅(CH₃)₂Si]₂NH,

[(C₆H₅)₂CH₃Si]₂NH, [H(CH₃)₂Si]₂NH

Selon un mode préférentiel de réalisation de l'invention, on utilise des hexaalkyldisilazanes.

L'hexaméthyldisilazane convient particulièrement bien.

Les quantités de réactifs à mettre en jeu dans le présent procédé jouent un rôle important. Comme déjà indiqué, la quantité de composé silazane doit être en excès par rapport à la quantité de trihalogénoborane, c'est-à-dire que le rapport du nombre d'équivalent-gramme de groupement ≡ Si - NH - Si ≡ de silazane sur le nombre de mole de trihalogénoborane doit être supérieur à 1.

De préférence, ces quantités sont avantageusement telles qu'elles correspondent à un rapport molaire du nombre d'équivalent-gramme de groupement ≡ Si - NH - Si ≡ de silazane sur le nombre de mole de trihalogénoborane d'au moins 1,5. De préférence encore, on travaillera avec des rapports molaires d'au moins 2. Il a en effet été constaté, entre autres, que plus ce rapport augmente et plus la teneur en chlore résiduel du polymère obtenu en fin de réaction diminue. De préférence enfin, ce rapport n'excède pas 4 car il a été trouvé qu'un trop fort excès en composé silazane conduit à des produits de masses moléculaires trop faibles, dont peu utilisables comme précurseurs de céramique. Selon l'invention, un rapport du nombre d'équivalent-gramme de groupement ≡ Si - NH - Si ≡ de silazane sur le nombre de mole de trihalogénoborane compris entre 2 et 3 convient donc particulièrement bien.

Selon une caractéristique essentielle du procédé selon l'invention, il importe que ce soit le composé silazane qui soit introduit dans le trihalogénoborane. Cette introduction, par opposition à un mélange entre réactifs de type quasi-instantané, se fait progressivement, c'est-à-dire que la coulée du composé silazane dans le trihalogénoborane est réalisée sur une durée plus ou moins étalée dans le temps ; pratiquement, selon les quantités de réactifs mises en jeu, cette durée peut varier de quelques minutes à plusieurs heures.

Il faut noter ici que l'introduction du composé silazane, pour un rapport du nombre d'équivalent-gramme de groupement ≡ Si - NH - Si ≡ de silazane sur le nombre de mole de trihalogénoborane de départ donné, peut être réalisée selon deux variantes différentes mais néanmoins équivalentes : cette introduction peut être en effet réalisée soit en effectuant une seule étape réactionnelle (procédé continu) soit en effectuant plusieurs étapes réactionnelles (procédé discontinu).

Ainsi, de manière plus précise et à titre purement illustratif, si l'on désire faire réagir une mole de trihalogénoborane et trois moles de disilazane, deux voies sont pratiquement possibles :
- la première consiste à introduire en une seule étape les trois moles de disilazane dans le trihalogénoborane, puis à récupérer le polymère formé ;
- la deuxième consiste dans une première étape à introduire par exemple une mole de disilazane dans le trihalogénoborane, puis à récupérer le polymère formé et, dans une deuxième étape, à introduire les deux moles restantes de disilazane dans le polymère récupéré précédemment, et ceci dans des conditions pratiques identiques à une introduction en continu, puis à récupérer le nouveau polymère formé.

Durant cette introduction, continue ou discontinue, le milieu réactionnel doit être maintenu à une température relativement basse, c'est-à-dire que l'on opère à des températures comprises entre - 100°C et 0°C, et de préférence comprises entre - 60°C et - 20°C.

On travaille généralement à la pression atmosphérique, bien que des pressions inférieures ou supérieures ne soient bien évidemment pas exclues.

La réaction entre le disilazane et le trihalogénoborane peut être opérée en masse ou, de préférence, en solution dans un solvant organique de type aprotique et apolaire (hexane, pentane, toluène, etc...) et sous conditions anhydres.

Après introduction du disilazane, il est avantageux, pour parfaire la réaction, de laisser mûrir quelques temps le milieu réactionnel en le laissant par exemple revenir progressivement à température ambiante.

Il peut être également avantageux, pour mieux structurer le polymère formé et augmenter ainsi les rendements lors de la pyrolyse ultérieure, de chauffer le milieu réactionnel, par exemple en le portant à la température de reflux du solvant, et ceci sur une durée pouvant aller de quelques minutes à plusieurs heures.

A l'issue de cette étape réactionnelle, on sépare le polymère du milieu de réaction, et ceci par tout moyen connu en soi, par exemple par filtration, ou bien encore par extraction et décantation au moyen notamment d'ammoniac liquide.

Le polymère ainsi récupéré, après éventuellement élimination du solvant (distillation ou autre), puis séchage, constitue alors la production.

Si nécessaire, on peut, dans une étape ultérieure, traiter le polymère ainsi obtenu dans le but de réduire encore sa teneur en chlore résiduel. Le traitement consiste alors à mettre en contact ledit polymère, en masse ou de préférence en milieu solvant organique anhydre (hexane, pentane, toluène,...), avec un composé présentant au moins un groupement NH₂ et ci-après dénommé agent d'aminolyse.

Parmi les agents d'aminolyse pouvant être utilisés, on peut citer l'ammoniac, les amines primaires, les diamines (hydrazine, alkylhydrazine, hydrazide, alkylenediamine...), les amides, et les silylamines.

On utilisera de préférence des composés qui répondent à la formule (V) suivante : 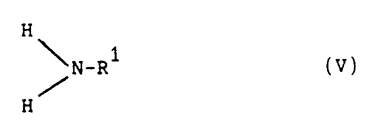
dans laquelle le radical R¹ est choisi parmi l'atome d'hydrogène, les radicaux hydrocarbonés et les radicaux silylés. Conviennent ainsi plus particulièrement :
- l'ammoniac (R¹ = atome d'hydrogène)
- les organoamines primaires (R¹ = radical alkyle, cycloalkyle, aryle, alkylaryle ou arylalkyle), telles que par exemple la méthylamine, l'éthylamine, la propylamine, la butylamine, la pentylamine, l'hexylamine, l'heptylamine et l'octylamine, la cyclopropylamine, la phénylamine...
- les silylamines, et plus particulièrement les triorganosilylamines comme la (triméthylsilyl)amine et la (triéthylsilyl)amine, ou bien encore les hydrogénoorganosilylamines comme l'(hydrogénodiméthylsilsyl)amine.

Les agents d'aminolyse préférés sont les alkylamines primaires et l'ammoniac.

Selon un mode de mise en oeuvre encore plus préféré, on opèrera avec l'ammoniac.

Si nécessaire, on peut également, toujours dans une étape ultérieure, traiter thermiquement le polymère obtenu (thermolyse) dans le but d'améliorer encore sa tenue à la pyrolyse, et donc son rendement pondéral en nitrure de bore. Cette thermolyse, généralement opérée en masse et à une température comprise entre 100°C et 200°C et de préférence sous atmosphère d'ammoniac, a pour effet de modifier la structure interne du polymère, probablement en augmentant son caractère réticulé, ce qui peut expliquer sa tenue thermique améliorée.

Les polymères à base de bore et d'azote susceptibles d'être obtenus selon l'invention présentent une masse molaire moyenne en nombre (M̅n) qui peut être comprise entre 500 et 10 000, et de préférence comprise entre 1 000 et 5 000.

Ils présentent d'autre part une masse molaire moyenne en poids (M̅w) pouvant s'étaler entre 600 et 100 000, et de préférence entre 1 000 et 10 000.

Suivant les conditions de mise en oeuvre du procédé décrit ci-avant (rapport du nombre d'équivalent-gramme de groupement ≡ Si - NH - Si ≡ de silazane sur le nombre de mole de trihalogénoborane, chauffage à reflux, thermolyse,...), les polymères selon l'invention peuvent se présenter, à température ambiante, sous une forme allant d'une huile peu visqueuse à très visqueuse jusqu'à l'état solide.

A l'exception des polymères ayant subi une étape ultérieure de thermolyse, les polymères selon l'invention sont de plus fusibles et solubles dans la plupart des solvants organiques usuels (hexane, toluène,...), ce qui peut être très avantageux au niveau de leur possibilité de mise en forme.

Les polymères à base de bore et d'azote selon l'invention trouvent une application toute particulière dans la fabrication de produits et articles céramiques contenant, au moins en partie, du nitrure de bore.

Dans le cas le plus général (obtention de poudres), on pyrolyse alors le polymère dans une atmosphère inerte, sous vide, ou de préférence sous ammoniac, à une température allant de 100°C à 2 000°C jusqu'à ce que le polymère soit converti entièrement en une céramique à base de nitrure de bore.

Le polymère, avant pyrolyse, peut également être mis en forme, par moulage ou par filage par exemple, pour aboutir finalement aux configurations les plus diverses telles que filaments, fibres, articles moulés, revêtements de support et autres. Dans le cas où l'on désire obtenir des fibres, le polymère est filé au moyen d'une filière classique (après fusion éventuelle si le polymère est initialement à l'état solide), puis est traité thermiquement à une température allant de 100°C à 2 000°C et de préférence sous atmosphère d'ammoniac, pour donner une fibre en nitrure de bore.

Les fibres obtenues peuvent alors servir de structure de renforcement pour des matériaux composites du type céramique/céramique, céramique/métal, ou céramique/plastique.

Des exemples illustrant les divers aspects de l'invention vont maintenant être donnés.

### EXEMPLE 1

Dans un réacteur de 2 litres sous azote, on introduit à -50°C, 810 g de toluène sec, 150 g de BCl₃ (1.28 mole), et on coule, en 1 h 30, 430 g d'hexaméthyldisilazane (2.66 moles), la température étant maintenue vers - 30°C. On laisse ensuite revenir pendant une nuit à la température ordinaire. On porte ensuite le mélange à reflux durant 4 heures.

Après filtration sous azote et évaporation, on récupère 103 g d'une huile très visqueuse.
Les caractéristique du polymère obtenu sont les suivantes :
Taux de Chlore résiduel : 0.3 % en poids
M̅n = 1140, M̅w = 3270, Ip - 2,86 (indice de polydispersité)
TGA (850°C sous Hélium) : 32,7 % en poids.

### EXEMPLE 2

Dans un réacteur de 2 litres sous azote, on introduit à - 25°C, 848 g d'hexane sec, 170 g de BCl₃ (1,45 mole), et on coule en 11 h 705 g d'hexaméthyldisilazane (4,36 moles) à une température comprise entre - 22°C et - 11°C. On laisse ensuite revenir pendant une nuit à la température ordinaire, puis, après filtration sous azote et évaporation du solvant, on récupère 160 g d'une huile très visqueuse.
Les caractéristique du polymère obtenu sont les suivantes :
Taux de Chlore résiduel : 0,1 % en poids
M̅n > 1000
M̅w > 3000
TGA (850°C sous Hélium) : 33,6 % en poids.

### EXEMPLE 3

Dans un réacteur de 2 litres sous azote, on introduit à - 28°C, 840 g d'hexane sec, 150 g de BCl₃ (1,28 mole) et on coule en 5 h, 415 g d'hexaméthyldisilazane (2,57 moles). Durant cette coulée, la température est maintenue entre - 25°C et - 20°C. On laisse ensuite revenir pendant 16 h à la température ordinaire. Par filtration sous azote, on récupère une solution limpide qui, par évaporation, conduit à 150 g d'une huile très visqueuse.

Le pourcentage de Chlore résiduel dans le polymère est alors de 1,2 % en poids.

Puis, dans un réacteur de 2 litres sous azote, on introduit les 150 g de l'huile obtenue précédemment et 370 g d'hexane sec, on introduit ensuite durant 20 mn de l'ammoniac gaz (séché par passage sur une colonne de KOH). La réaction est légèrement exothermique. Après filtration sous azote et évaporation du solvant, on récupère 145 g d'un solide blanc constituant la production.
Les caractéristiques du polymère récupéré sont les suivantes :
Température de ramollissement : 90°C
Température de fusion : 150°C
Taux de Chlore résiduel : 0,1 % en poids
M̅n = 1550, M̅w = 5790, Ip = 3,73
Solubilité : hexane, toluène
TGA (850°C sous Hélium) : 18,60 % en poids.

### EXEMPLE 4

Dans un ballon de 3 litres séché sous azote, on introduit à - 78°C 950 ml d'hexane sec et 159 g (1,35 mole) de BCl₃. On ajoute ensuite en 2 h, 220 g d'hexamethyldisilazane (1,35 mole). Durant cette coulée, la température est maintenue vers - 60°C. On laisse ensuite remonter la température jusqu'à l'ambiante durant 16 h ; après filtration sous azote et évaporation, on récupère 123 g d'une huile limpide.

Le pourcentage de Chlore résiduel dans le polymère est alors de 39,5 % en poids.

Puis, dans un ballon de 1 litre séché sous azote, on introduit à - 60°C, 600 ml de toluène sec, 44 g de l'huile obtenue précédemment et on coule, en 45 mn, 90,2 g d'hexamethyldisilazane (0,558 mole). On laisse ensuite revenir en une nuit à température ambiante ; après filtration sous azote et évaporation, on récupère 45,2 g d'une huile peu visqueuse.
Les caractéristiques du polymère obtenu sont les suivantes :
Taux de Chlore résiduel : 0,2 % en poids
TGA (850°C sous Hélium) : 16,43 % en poids.

### EXEMPLE 5

Dans un réacteur de 250 ml séché sous azote, on introduit 9,9 g du polymère obtenu à l'issue de l'exemple 4 et on le porte à 150°C pendant 4 h sous ammoniac ; on obtient après refroidissement 4,8 g d'un solide blanc infusible.

La TGA (850°C sous Hélium) de ce polymère est de 37,8 % en poids.

La pyrolyse sous NH3 et à 1 000°C de ce polymère conduit à une céramique totalement blanche. Le rendement de pyrolyse est alors de 36 % en poids.

Les analyses IR et RAMAN indiquent que l'on obtient du nitrure de bore. L'étude du spectre aux rayons X du polymère pyrolisé sous argon entre 1 000 et 1 500°C montre que le nitrure de bore se trouve sous la forme hexagonale.

### EXEMPLE 6

Dans un tricol de 1 litre sous azote on introduit à -35°C, 350 g de toluène sec, 84 g de BCl₃ (0,71 mole) et on coule en 1 heure, 234 g (1,45 mole) d'hexaméthyldisilazane, la température est maintenue vers -35°C. On laisse ensuite revenir à température ambiante. On porte ensuite à reflux durant 6 heures. On laisse refroidir, on filtre sous azote et par évaporation du filtrat on récupère 46,6 g d'un solide blanc.
Les caractéristiques du polymère récupéré sont les suivantes :
Taux de chlore résiduel < 0,1 % en poids
M̅n = 1 100
M̅w = 3 500
IP = 2,80
TGA (850°C sous Hélium) : 50,43 % en poids.

### EXEMPLE 7

Dans un tricol de 1 litre sous azote on introduit à -35°C, 371 g de toluène sec, 88 g (0,75 mole) de BCl₃ et on coule en 1 heure 243 g (1,5 mole) d'hexaméthyldisilazane, la température étant maintenue vers -35°C.

On laisse ensuite revenir à température ambiante. On porte à reflux durant 1 heure. On laisse refroidir, on filtre sous azote et par évaporation du filtrat on récupère 67,5 g d'une huile visqueuse.
Les caractéristiques du polymère récupéré sont les suivantes :
taux de chlore résiduel < 0,1 % en poids
M̅n = 1090
M̅w = 3060
Ip = 2,81
TGA (850°C sous Hélium) : 37,13 % en poids.

### EXEMPLE 8

Dans un tricol de 1 litre sous azote on introduit à -35°C, 345 g de toluène sec, 59 g (0,503 mole) de BCl₃ et on coule en 1 heure, 233 g (1,06 mole) d'hexaméthyltrisilazane (composé cyclique de formule [Si(CH₃)₂-NH]₃), la température étant maintenue vers -35°C. On laisse ensuite revenir à température ambiante, puis on porte à reflux durant 1 heure.

On laisse refroidir, on filtre sous azote et par évaporation du filtrat, on récupère 118 g d'une huile visqueuse.
Les caractéristiques du polymère récupéré sont les suivantes :
taux de chlore résiduel : 4 % en poids
M̅n > 1000
M̅w > 2000
TGA (850°C sous hélium) : 15,33 %

### EXEMPLE N° 9

Dans un tricol de trois litres sous azote, on introduit à - 35°C, 1 136 g de toluène sec, 222 g (1,88 mole) de BCl₃ et on coule en une heure, 764 g (4,74 mole) d'hexamethyldisilazane : on laisse revenir à la température ordinaire et on porte à reflux durant 4 heures. On laisse refroidir, on filtre sous azote et par évaporation du filtrat, on récupère 190 g d'une huile limpide. Les caractéristiques du polymère sont les suivantes :
taux de chlore résiduel < 0,1 % en poids
M̅n = 730
M̅w = 1 370
IP = 1,88
TGA (850°C sous hélium) = 23,5 %
Viscosité dynamique à 21°C : 4 000 mPa.s
Viscosité dynamique à 60°C : 230 mPa.s

La pyrolyse à 1 000°C sous ammoniac de ce polymère conduit à une céramique totalement blanche avec un rendement de pyrolyse de 24,7 %.

Les analyses élémentaires, IR, Raman indiquent que l'on obtient du nitrure de bore.

### EXEMPLE N° 10

Dans un tricol de trois litres sous azote, on introduit à - 35°C, 1 050 g de toluène sec ; 220 g (1,87 mole) de BCl₃ et on coule en 45 mn, 664 g (4,12 mole) d'hexaméthyldisilazane. On laisse revenir à la température ordinaire et on élimine lentement le triméthylchlorosilane formé. La durée totale du reflux est de 16 heures. On laisse refroidir ; on filtre sous azote et par évaporation du filtrat, on récupère 112 g d'un solide blanc.
Les caractéristiques du polymère sont les suivantes :
M̅n = 630
M̅w = 2 390
IP = 3,8
Taux de chlore résiduel < 0,1 % en poids
TGA (850°C sous hélium) = 39,50 %
Ce polymère est soluble dans le toluène, CH₂Cl₂, CHCl₃.

La pyrolyse à 1 000°C sous ammoniac de ce polymère conduit à une céramique totalement blanche avec un rendement de pyrolyse de 34 %.

Les analyses élémentaires, IR et raman indiquent que l'on obtient du nitrure de bore.

## Revendications

1. Procédé de synthèse de polymères à base de bore et d'azote par réaction entre au moins un trihalogénoborane et au moins un composé silazane présentant au moins un groupement ≡Si-NH-Si ≡, caractérisé par le fait qu'il consiste à introduire progressivement, en maintenant le milieu réactionnel à une température comprise entre -100°C et 0°C, ledit composé silazane dans ledit trihalogénoborane le rapport du nombre d'équivalent - gramme de groupement ≡Si-NH-Si de silazane sur le nombre de mole de trihalogénoborane étant compris entre 1 et 4, puis à récupérer le produit de réaction ainsi obtenu.

2. Procédé selon la revendication 1 caractérisé en ce que la réaction s'effectue en solution dans un solvant organique anhydre.

3. Procédé selon l'une quelconque des revendications précédentes caractérisé en ce que le trihalogénoborane est le trichloroborane.

4. Procédé selon l'une quelconque des revendications précédentes caractérisé en ce que l'on utilise des quantités de réactifs correspondant à un rapport du nombre d'équivalent - gramme de groupement ≡ Si - NH - Si ≡ de silazane sur le nombre de mole de trihalogénoborane d'au moins 1,5.

5. Procédé selon la revendication 5 caractérisé en ce que ledit rapport est au moins de 2.

6. Procédé selon l'une quelconque des revendications précédentes caractérisé en ce que ledit composé silazane répond aux formules (I) ou (II) suivantes :
H₂N(R₂ SiNH)ₚ SiR₂NH₂ (I)
R₃SiNH(R₂ SiNH)ₚ' SiR₃ (II)
dans lesquelles les radicaux R, identiques ou différents, sont choisis parmi l'hydrogène et les radicaux alkyles, cycloalkyles, aryles, alkylaryles et arylalkyles ; p et p' sont des nombres entiers pouvant être compris entre 1 et 1 000.

7. Procédé selon la revendication 6, caractérisé en ce que p et p' sont compris entre 3 et 300.

8. Procédé selon l'une quelconque des revendications 1 à 5 caractérisé en ce que ledit composé silazane est cyclique et qu'il répond à la formule (III) suivante :
(R₂SiNH)ₙ (III)
dans laquelle les radicaux R, identiques ou différents, sont choisis parmi l'hydrogène et les radicaux alkyles, cycloalkyles, aryles, alkylaryles et arylalkyles ; n est un nombre entier compris entre 3 et 10.

9. Procédé selon la revendication 8, caractérisé en ce que n est égal à 3 ou 4.

10. Procédé selon l'une quelconque des revendications 1 à 5 caractérisé en ce que ledit composé silazane répond à la formule générale (IV) suivante :
(R₃Si)₂NH (IV)
dans laquelle les radicaux R, identiques ou différents, représentent l'atome d'hydrogène ou des radicaux hydrocarbonés, éventuellement substitués, choisis parmi les radicaux alkyles, cycloalkyles, aryles, alkylaryles et arylalkyles.

11. Procédé selon la revendication 10 caractérisé en ce que R représente l'atome d'hydrogène ou un radical alkyle.

12. Procédé selon la revendication 11 caractérisé en ce que l'on utilise un hexaalkyldisilazane.

13. Procédé selon la revendication 12 caractérisé en ce que l'on utilise l'hexamethyldisilazane.

14. Procédé selon l'une quelconque des revendications précédentes caractérisé en ce que lesdits polymères à base de bore et d'azote sont ultérieurement traités au moyen d'un composé présentant au moins un groupement NH₂ dans le but notamment de diminuer leur teneur en halogène résiduel.

15. Procédé selon la revendication 14 caractérisé en ce que ledit composé répond à la formule générale (V) : 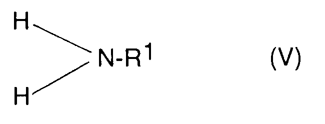 dans laquelle R¹ est choisi parmi l'atome d'hydrogène, les radicaux hydrocarbonés et les radicaux silylés.

16. Procédé selon la revendication 15 caractérisé en ce que R¹ est choisi parmi l'atome d'hydrogène et les radicaux alkyles.

17. Procédé selon l'une quelconque des revendications précédentes caractérisé en ce que lesdits polymères à base de bore et d'azote sont ultérieurement traités thermiquement dans le but notamment d'améliorer leur tenue à la pyrolyse.

18. Polymères à base de bore et d'azote susceptibles d'être obtenus selon un procédé tel que défini à l'une quelconque des revendications 1 à 17.

19. Procédé de préparation de produits céramiques à base de nitrure de bore caractérisé en ce qu'il consiste à pyrolyser dans une atmosphère inerte, sous vide, ou sous ammoniac, à une température allant de 100°C à 2 000°C, un polymère à base de bore et d'azote tel que défini à la revendication 18.

20. Procédé selon la revendication 19 caractérisé en ce que, préalablement à ladite pyrolyse, ledit polymère est mis à une forme d'article désiré, notamment sous la forme d'une fibre.

## Claims

1. Process for the synthesis of polymers based on boron and nitrogen, by reaction between at least one trihaloborane and at least one silazane compound possessing at least one ≡ Si-NH-Si≡ group, characterised in that it consists in gradually introducing the said silazane compound into the said trihaloborane while the reaction medium is maintained at a temperature of between -100°C and 0°C, the ratio of the number of gram-equivalents of silasane ≡Si-NH-SL≡ groups to the number of moles of trihaloborane being between 1 and 4, and then in recovering the reaction product thereby obtained.

2. Process according to Claim 1, characterised in that the reaction is performed in solution in an anhydrous organic solvent.

3. Process according to either of the preceding claims, characterised in that the trihaloborane is trichloroborane.

4. Process according to any one of the preceding claims, characterised in that quantities of reactants corresponding to a ratio of the number of gram-equivalents of silasane ≡Si-NH-Si≡ groups to the number of moles of trihaloborane of at least 1.5 are used.

5. Process according to Claim 4, characterised in that the said ratio is at least 2.

6. Process according to any one of the preceding claims, characterised in that the said silazane compound corresponds to the following formulae (I) or (II):
H₂N(R₂SiNH)ₚSiR₂NH₂ (I)
R₃SiNH(R₂SiNH)_{p'}SiR₃ (II)
in which formulae the radicals R, which may be identical or different, are chosen from hydrogen and alkyl, cycloalkyl, aryl, alkylaryl and arylalkyl radicals; p and p' are integers which can be between 1 and 1,000.

7. Process according to Claim 6, characterised in that p and p' are between 3 and 300.

8. Process according to any one of Claims 1 to 5, characterised in that the said silazane compound is cyclic and that it corresponds to the following formula (III):
(R₂SiNH)ₙ (III)
in which the radicals R, which may be identical or different, are chosen from hydrogen and alkyl, cycloalkyl, aryl, alkylaryl and arylalkyl radicals; n is an integer between 3 and 10.

9. Process according to Claim 8, characterised in that n is equal to 3 or 4.

10. Process according to any one of Claims 1 to 5, characterised in that the said silazane compound corresponds to the following general formula (IV):
(R₃Si)₂NH (IV)
in which the radicals R, which may be identical or different, denote a hydrogen atom or hydrocarbon radicals, optionally substituted, chosen from alkyl, cycloalkyl, aryl, alkylaryl and arylalkyl radicals.

11. Process according to Claim 10, characterised in that R denotes a hydrogen atom or an alkyl radical.

12. Process according to Claim 11, characterised in that a hexaalkyldisilazane is used.

13. Process according to Claim 12, characterised in that hexamethyldisilazane is used.

14. Process according to any one of the preceding claims, characterised in that the said polymers based on boron and nitrogen are subsequently treated by means of a compound possessing at least one NH₂ group for the purpose, in particular, of decreasing their residual halogen content.

15. Process according to Claim 14, characterised in that the said compound corresponds to the general formula (V): 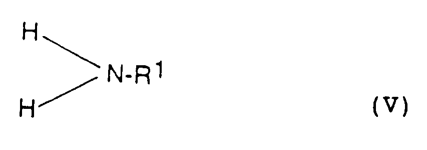 in which R¹ is chosen from a hydrogen atom, hydrocarbon radicals and silyl radicals.

16. Process according to Claim 15, characterised in that R¹ is chosen from a hydrogen atom and alkyl radicals.

17. Process according to any one of the preceding claims, characterised in that the said polymers based on boron and nitrogen are subsequently treated thermally with the object, in particular, of improving their resistance to pyrolysis.

18. Polymers based on boron and nitrogen, capable of being obtained according to a process as defined in any one of Claims 1 to 17.

19. Process for preparing ceramic products based on boron nitride, characterised in that it consists in pyrolysing a polymer based on boron and nitrogen as defined in Claim 18, in an inert atmosphere, under vacuum or under ammonia, at a temperature ranging from 100°C to 2,000°C.

20. Process according to Claim 19, characterised in that, prior to the said pyrolysis, the said polymer is shaped into a desired article, in particular in the form of a fibre.

## Patentansprüche

1. Verfahren zur Herstellung von Polymeren auf Basis von Bor und Stickstoff, durch Umsetzen wenigstens eines Trihalogenborans und wenigstens einer Silazanverbindung, welche wenigstens eine Gruppe ≡Si-NH-Si≡ aufweist, dadurch gekennzeichnet, daß man schrittweise, während man die Reaktionsmischung bei einer Temperatur zwischen -100°C und 0°C hält, besagte Silazankomponente besagtem Trihalogenboran hinzufügt, wobei das Verhältnis der Grammäquivalenzzahl der ≡Si-NH≡Si-Gruppe des Silazans, bezogen auf die Zahl an Molen der Trihalogenborane, zwischen 1 und 4 beträgt, gefolgt von der Isolierung des so erhaltenen Reaktionsproduktes.

2. Verfahren nach Anspruch 1, dadurch gekennzeichnet, daß die Reaktion in Lösung in einem organischen wasserfreien Lösungsmittel durchgeführt wird.

3. Verfahren nach einem der vorstehenden Ansprüche, dadurch gekennzeichnet, daß das Trihalogenboran das Trichlorboran ist.

4. Verfahren nach einem der vorstehenden Ansprüche, dadurch gekennzeichnet, daß man die Mengen der entsprechenden Ausgangsstoffe so wählt, daß das Verhältnis der Grammäquivalenzzahlen ≡Si-NH-Si≡ Gruppe des Silazans, bezogen auf die Anzahl der Mole des Trihalogenborans, wenigstens 1,5 entspricht.

5. Verfahren nach Anspruch 4, dadurch gekennzeichnet, daß besagtes Verhältnis wenigstens 2 ist.

6. Verfahren nach einem der vorstehenden Ansprüche, dadurch gekennzeichnet, daß die besagte Silazanverbindung den Formeln (I) oder (II) wie folgt entspricht:
H₂N(R₂SiNH)ₚSiR₂NH₂ (I)
R₃SiNH(R₂SiNH)ₚ'SiR₃ (II)
in denen die Reste R, gleich oder unterschiedlich, ausgewählt sind aus Wasserstoff und Alkyl-, Cycloalkyl-, Aryl-, Alkylaryl- und Arylalkylresten, und wobei p und p' ganze Zahlen sind, welche zwischen 1 und 1000 liegen.

7. Verfahren nach Anspruch 6, dadurch gekennzeichnet, daß p und p' zwischen 3 und 300 liegen.

8. Verfahren nach einem der Ansprüche 1 bis 5, dadurch gekennzeichnet, daß die besagte Silazanverbindung cyclisch ist und der folgenden Formel (III) entspricht:
(R₂SiNH)ₙ (III)
wobei die Reste R, gleich oder verschieden, ausgewählt sind aus Wasserstoff oder Alkyl-, Cycloalkyl-, Aryl-, Alkylaryl- und Arylalkylresten und n eine ganze Zahl zwischen 3 und 10 ist.

9. Verfahren nach Anspruch 8, dadurch gekennzeichnet, daß n gleich 3 oder 4 ist.

10. Verfahren nach einem der Ansprüche 1 bis 5, dadurch gekennzeichnet, daß besagte Silazanverbindung der allgemeinen folgenden Formel (IV) entspricht:
(R₃Si)₂NH (IV)
wobei die Reste R, gleich oder verschieden, ein Wasserstoffatom oder ein Kohlenwasserstoffrest, gegebenenfalls substituiert ist, der ausgewählt ist aus Alkyl-, Cycloalkyl-, Aryl-, Alkylaryl- und Arylalkylresten.

11. Verfahren nach Anspruch 10, dadurch gekennezeichnet, daß R ein Wasserstoffatom oder ein Alkylrest ist.

12. Verfahren nach Anspruch 11, dadurch gekennzeichnet, daß man ein Hexaalkyldisilazan verwendet.

13. Verfahren nach Anspruch 12, dadurch gekennzeichnet, daß man Hexamethyldisilazan verwendet.

14. Verfahren nach einem der vorstehenden Ansprüche, dadurch gekennzeichnet, daß besagte Polymere auf Basis von Bor und Stickstoff einer Nachbehandlung mittels einer Verbindung unterzogen werden, die wenigstens eine NH₂-Gruppe aufweist, mit dem Ziel, insbesondere ihren Restgehalt an Halogen zu vermindern.

15. Verfahren nach Anspruch 14, dadurch gekennzeichnet, daß besagte Verbindung der allgemeinen Formel (V) entspricht: 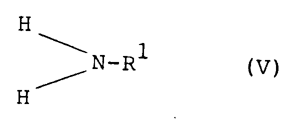 wobei R¹ ausgewählt ist aus dem Wasserstoffatom, Kohlenwasserstoffresten und Silylresten.

16. Verfahren nach Anspruch 15, dadurch gekennzeichnet, daß R¹ ausgewählt ist aus dem Wasserstoffatom und Alkylresten.

17. Verfahren nach einem der vorstehenden Ansprüche, dadurch gekennzeichnet, daß besagte Polymere auf Basis von Bor und Stickstoff einer thermischen Nachbehandlung unterzogen werden, mit dem Ziel, insbesondere ihren Gehalt bei der Pyrolyse zu verbessern.

18. Polymere auf Basis von Bor und Stickstoff, erhältlich gemäß dem Verfahren nach einem der vorstehenden Ansprüche 1 bis 17.

19. Verfahren zur Herstellung von keramischen Produkten auf Basis von Bornitrid, dadurch gekennzeichnet, daß man in einer inerten Atmosphäre, im Vakuum oder unter Amoniak, bei einer Temperatur, die zwischen 100°C und 2000°C liegt, ein Polymer auf Basis von Bor und Stickstoff, wie es in Anspruch 18 definiert ist, pyrolisiert.

20. Verfahren nach Anspruch 19, dadurch gekennzeichnet, daß man vor besagter Pyrolyse besagtes Polymer in eine für den Artikel gewünschte Form bringt, insbesondere in Form einer Faser.
